# EUROPEAN PATENT SPECIFICATION

(11) **EP 3 410 825 B1**
(45) Date of publication and mention of the grant of the patent: **13.01.2021**
(21) Application number: 17173342.1
(22) Date of filing: 30.05.2017
(51) Int. Cl.: H02M 3/158, H05B 45/375, H02M 1/08

(54) **METHOD AND CIRCUIT FOR EFFICIENT AND ACCURATE DRIVING OF LEDS ON BOTH HIGH AND LOW CURRENTS**
VERFAHREN UND SCHALTUNG ZUM EFFIZIENTEN UND GENAUEN ANTRIEB VON LEDS MIT STARKEM UND SCHWACHEM STROM
PROCÉDÉ ET CIRCUIT DE COMMANDE EFFICACE ET PRÉCISE DE DEL SUR COURANTS À HAUTE ET BASSE INTENSITÉ

(43) Date of publication of application: 05.12.2018
(73) Proprietor: Helvar Oy Ab, 02150 Espoo (FI)
(72) Inventor: Vihinen, Hannu, 02150 Espoo (FI)
(74) Representative: Papula Oy

(56) References cited:
- US-A1- 2003 222 629
- US-A1- 2004 189 269
- US-A1- 2014 354 168
- US-A1- 2015 236 590
- US-A1- 2017 231 042
- US-B1- 9 420 656

## Description

### FIELD OF THE INVENTION

The invention relates to producing variable amounts of light with solid-state light sources, such as LEDs. In particular the invention relates to combining highly efficient and highly accurate driving of LEDs at both high and low currents.

### BACKGROUND OF THE INVENTION

The two main approaches to LED dimming are PWM (pulse width modulation) and CCR (constant current reduction), of which the latter is also referred to with other names, like analog dimming or linear dimming. Both utilize an output current source, such as a buck converter, to drive current through the LEDs. The difference is that in PWM the nominal output amperage of the current source is kept constant but it is operated in intervals occurring at the PWM frequency, while in CCR the current source operates constantly but its nominal output amperage is varied.

Both approaches have their pros and cons. The main drawback of PWM is its tendency to cause flicker that, although rapid enough to go unnoticed by the human eye, may give rise to subconscious effects in humans and can cause visual effects through interference with other oscillatory phenomena like video imaging. CCR works well at relatively large output currents but becomes increasingly demanding in terms of control accuracy when the light output needs to be dimmed down to only few per cent of its full value. The efficiency of a LED driver using CCR may be poor at the lowest dimming levels, because switching losses and the like take a relatively large proportion of the overall power consumption. Another known drawback of CCR are the possible changes in the colour of light that the LEDs emit at low currents.

A known solution is so-called hybrid dimming that combines PWM and CCR in some advantageous way, for example so that CCR is used to reduce the light output from 100% to 20%, and further dimming towards the lowest percentage values is achieved by keeping the nominal output current at 20% but making it pulsate at a lower and lower duty cycle. Thus during the PWM pulses the light output is not more than 20%, so the effects of flicker are not that prominent, but they cannot be completely avoided. An inherent drawback of a hybrid dimming scheme is the need for both CCR and PWM capability in the driver, which adds complicatedness and increases manufacturing costs.

A prior art document US 2004/0189269 A1 discloses a control device and method for synchronizing the activation and deactivation of a high-side switch and a low-side switch in a converter that acts as a voltage regulator.

### SUMMARY OF THE INVENTION

It is an objective of the present invention to provide a dimmable driver device according to claim 1 and a method for driving and dimming LEDs according to claim 9 so that high accuracy and efficiency can be achieved at both high and low brightness levels. Another objective of the present invention is to avoid any interference effects caused by pulsating illumination by the LEDs.

The objectives of the invention are achieved by using an actively controlled switch on the freewheeling current path of the switched-mode converter used as the output current source of the LED driver and allowing the current through the energy-storing inductor to go negative at low dimming levels.

According to an aspect of the invention there is provided a dimmable driver device according to claim 1.

According to another aspect of the invention there is provided a method for driving and dimming semiconductor light sources with variable effective current therethrough according to claim 9.

The invention is related to driving and dimming semiconductor light sources, such as LEDs, OLEDs, laser diodes, or the like. For simplicity the word LEDs is often used while the meaning is not to limit the discussion to just LEDs in a narrow sense but to semiconductor light sources in general.

The exemplifying embodiments of the invention presented in this patent application are not to be interpreted to pose limitations to the applicability of the appended claims. The verb "to comprise" and its derivatives are used in this patent application as an open limitation that does not exclude the existence of features that are not recited. The features described hereinafter are mutually freely combinable unless explicitly stated otherwise.

The novel features which are considered as characteristic of the invention are set forth in particular in the appended claims. The invention itself, however, both as to its construction and its method of operation, together with additional objects and advantages thereof, will be best understood from the following detailed description of specific embodiments when read in connection with the accompanying drawings.

### BRIEF DESCRIPTION OF THE DRAWINGS

- Figure 1: illustrates a known driver device for semiconductor light sources,
- figure 2: illustrates a driver device according to an embodiment,
- figure 3: illustrates an inductor current under certain circumstances,
- figure 4: illustrates inductor current under certain other circumstances,
- figure 5: illustrates the switching signals to controllable switches in the driver device,
- figure 6: illustrates the principle of measuring separately the AC and DC components of a current,
- figure 7: illustrates a part of a control circuit according to an embodiment, and
- figure 8: illustrates another part of a control circuit according to an embodiment.

### DETAILED DESCRIPTION

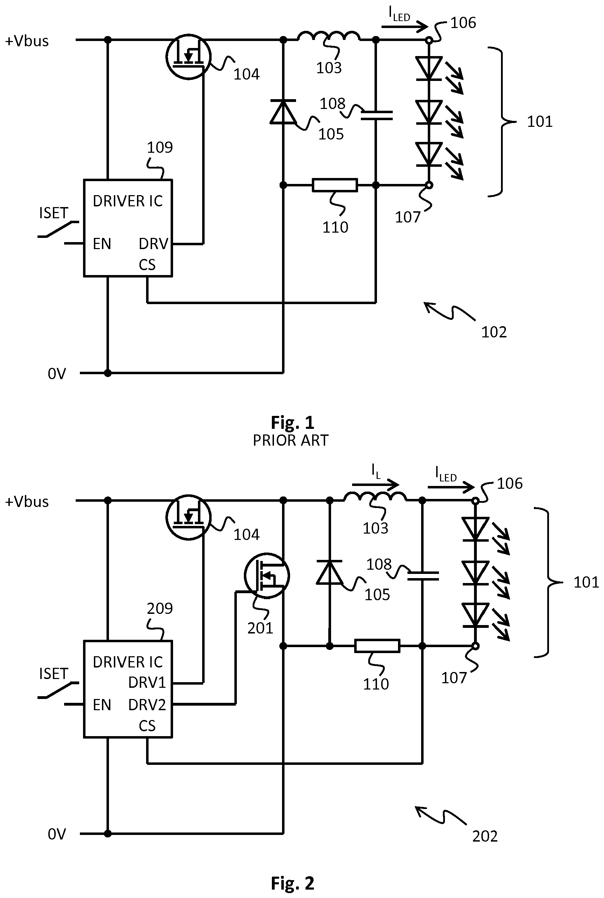

Fig. 1 illustrates the output section of a known driver device for semiconductor light sources 101. The output current source 102 of the driver device comprises a switched-mode converter, which here is a buck converter of the so-called high-side switch type. There is an energy-storing inductor 103, a power switch 104 and a freewheeling current path through a diode 105. The output of the driver device comprises a first node 106 and a second node 107 that are parts of the circuit of the output current source. A capacitor 108 is coupled essentially across the output. The expression "essentially across" is used to emphasize that the capacitor 108 does not need to be directly connected to both nodes 106 and 107 of the output, but there may be other components in between. However, the capacitor 108 is close enough to the actual output, and has a large enough capacitance, so that it can maintain the voltage at the output of the switched-mode converter at or above the largest sum of forward threshold voltages of serially connected semiconductor light sources 101 across the output. In a typical LED driver of the kind known at the time of writing this description this means a capacitance in the order of hundreds of nanofarads. Maintaining an essentially constant output voltage of the driver device means that a least some current flows through the semiconductor light sources 101 all the time when the driver device is actively operating.

A control circuit 109 is coupled to the control input (gate electrode) of the power switch 104 and configured to selectively make the power switch 104 conductive and non-conductive in turns, according to the operating principle of a switched-mode converter. When the power switch 104 is conductive, an increasing electric current flows through the energy-storing inductor 103, loading energy into its magnetic field. An increase is seen also in the current I_{LED} through the semiconductor light sources 101. The control circuit 109 obtains a current measurement from current-sensing resistor 110. When the measured current reaches or exceeds an upper limit, the control circuit 109 makes the power switch 104 non-conductive. The current through the energy-storing inductor 103 begins to decrease as energy is discharged from the magnetic field. When the current measurement from the current-sensing resistor 110 reaches a lower limit, the control circuit 109 makes the power switch 104 conductive again. At least the upper limit of the current may depend on a control signal marked as ISET in fig. 1 that the control circuit 109 receives from e.g. a controlling microprocessor.

Fig. 2 illustrates the output current source 202 of a driver device for semiconductor light sources that has much in common with that of fig. 1: the general appearance of a switched-mode converter; the energy-storing inductor 103, the power switch 104, and the diode 105 on a freewheeling current path; the output nodes 106 and 107; and the capacitor 108 coupled essentially across the output for maintaining an essentially constant output voltage of the driver device. The output current source 202 is coupled to the positive and negative nodes of an internal DC voltage of the driver device, marked with +Vbus and 0V. As a difference to fig. 1 the driver device of fig. 2 comprises a controllable switch 201 on the freewheeling current path. The controllable switch 201 is here a MOSFET (metal oxide semiconductor field effect transistor) so its control input is its gate electrode. The controllable switch 201 is coupled in parallel with the diode 105 on the freewheeling current path.

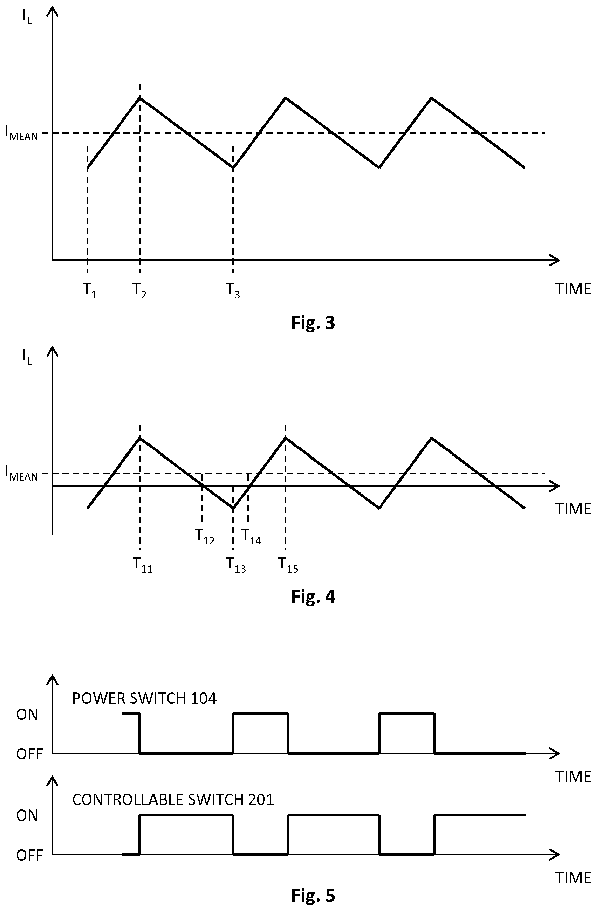

Fig. 3 illustrates schematically the current I_{L} through the energy-storing inductor 103 in fig. 2 when the desired output current of the driver device is high, i.e. when the semiconductor light sources 101 are expected to emit a relatively large amount of light. It should be noted that the momentary current I_{L} through the energy-storing inductor 103 is not the same as the momentary current I_{LED} through the semiconductor light sources 101, because the capacitor 108 constitutes a parallel current path across the output so that the charging and discharging of the capacitor 108 will cause some current to flow to and from the capacitor 108. At time T₁ the power switch 104 is made conductive, so the current I_{L} through the energy-storing inductor 103 begins to increase. At time T₂ the power switch 104 is made non-conductive, so the current I_{L} through the energy-storing inductor 103 begins to decrease. At time T₃ the same cycle begins anew. The effective current through the LEDs is the mean current I_{MEAN}, because in steady state the net effect of charging and discharging the capacitor 108 is zero.

The periodically increasing and decreasing current through the energy-storing inductor 103 would take the form shown in fig. 3 even in the absence of the controllable switch 201, because between times T₂ and T₃ when the power switch 104 is non-conductive, the freewheeling current would flow through the diode 105. However, even in this case it is advantageous to make the control circuit 209 create switch-on and switch-off signals to the power switch 104 and the controllable switch 201 in complementary manner. In other words, it is advantageous for the control circuit 209 to selectively maintain the controllable switch 201 conductive during periods when the power switch 104 is non-conductive. In fig. 3 this is between times T₂ and T₃. A MOSFET in conductive state conducts in both directions, and the forward voltage drop between the source and drain electrodes of a conductive MOSFET even in the "wrong" conduction direction (from source to drain) may be significantly smaller than that between the anode and cathode of a diode. In any case the parallel coupling of a diode 105 and controllable switch 201 offers more current-carrying capability than the diode 105 alone, so conduction losses can be made smaller between times T₂ and T₃.

Fig. 4 illustrates the operation of the driver device when the desired output current is low. Fig. 5 illustrates the conductive and non-conductive periods of the power switch 104 and the controllable switch 201. It is illustrative to begin the analysis from time T₁₁, when the power switch 104 has just been made non-conductive. According to the known law of induction the energy discharged from the magnetic field of the inductor supports the decreasing current that first continues to flow in the positive direction to the right from the energy-storing inductor 103. At time T₁₂ the current I_{L} through the energy-storing inductor has decreased to zero, and all energy has been depleted from its magnetic field. A conventional buck converter like that in fig. 1 would operate in discontinuous mode, in which the current through the energy-storing inductor would just remain zero. However, in the driver device of fig. 2 the controllable switch 201 is still maintained conductive at and beyond time T₁₂, and a voltage -V_{LED} (actually: -V_{LED} minus the forward voltage drop over the controllable switch 201) exists across the energy-storing inductor 103. Thus an electric current flows from the right to the left through the energy-storing inductor 103 and down through the controllable switch 201 towards the lower electrode of the capacitor 108.

At time T₁₃ the controllable switch 201 is made non-conductive, and the power switch 104 is made conductive again. The time derivative of the current I_{L} through the energy-storing inductor 103 changes sign, but due to the inductance of the energy-storing inductor 103 the current through it continues to flow in the negative direction for a while until at time T₁₄ the current begins to flow in the positive direction again. At time T₁₅ the current has reached its highest value and the cycle begins anew by making the power switch 104 non-conductive.

In the same way as in fig. 3 the effective current through the LEDs is the mean current I_{MEAN}, because also here the assumption of steady-state operation requires the net effect of charging and discharging the output capacitor 108 is zero. An important difference to a conventional buck converter that would operate in discontinuous mode is that although the effective LED current I_{MEAN} comes close to zero, the peak-to-peak amplitude of the inductor current I_{L} remains relatively large. This has certain advantageous consequences in designing the measurement and control loop, as will be explained in more detail later in this text.

A MOSFET contains an internal body diode directed from its source to its drain, so basically the freewheeling diode 105 is superfluous in fig. 2 and could be omitted. However, at the moment when the power switch 104 is made non-conductive and the freewheeling current should begin to flow it is advantageous to enable its flow with as little additional delay as possible. A diode optimized for fast switching, such as a Schottky diode for example, may be a good choice. The strong urge to avoid simultaneous conduction of the power switch 104 and the controllable switch 201 may require waiting for a short dead time after the power switch 104 was made non-conductive before the controllable switch 201 is made conductive, but the freewheeling diode 105 is free to begin conducting as soon as the anode-to-cathode voltage across it overcomes the forward voltage drop. Additionally the use of a diode and a MOSFET in parallel on the freewheeling current path involves the advantage of increased current-carrying capability.

The switched-mode converter of fig. 2 is of the high-side switch type, meaning that the power switch 104 is between the positive node +Vbus of the internal DC voltage and the first end of the energy-storing inductor 103. The capacitor 108 is between the second end of the energy-storing inductor 103 and the negative node 0V of the internal DC voltage. The controllable switch 201 is between the first end of the energy-storing inductor 103 and the negative node 0V of the internal DC voltage. The use of the word "between" emphasizes that these connections need not be direct but may go through other components: for example the coupling from the lower electrode of the capacitor 108 to the negative node 0V of the internal DC voltage goes through the current-sensing resistor 110.

As such, the location of the current-sensing resistor 110 between the second (cathode end) node 107 of the driver device output and the negative node 0V of the internal DC voltage is not the only possibility, but current-sensing resistors and/or other kinds of current sensors could be placed also elsewhere in the circuit. Basically it is possible to design a LED driver even with just forward control, i.e. without a current feedback measurement, although current feedback helps to improve the control accuracy. The point at which the current is measured may be such where a current flows both when the power switch 104 is conductive and when it is non-conductive, or a measurement point may be selected so that current is only measured when the power switch 104 is conductive. It is also possible to use two current sensors, one of which measures the current when the power switch 104 is conductive and the other when it is non-conductive. Wherever the current sensor is located, a coupling from the current sensor to the control circuit enables making the control circuit operate on basis of changes in the electric current measured at the current sensor.

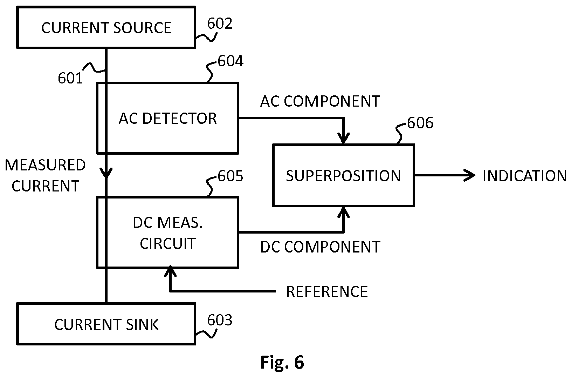

The advantageousness of maintaining the peak-to-peak amplitude of an observed current large despite the effective value of the LED current being small is described next. Fig. 6 illustrates a current measuring principle that is described in detail in the co-pending European patent application number EP17159301.5, which is not yet available to the public at the time of writing this text. An electric current flowing through a current sensor on a current path 601 between a current source 602 and a current sink 603 is subjected to AC-sensitive current detection in an AC measurement branch 604 and to DC-sensitive current detection in a DC measurement branch 605. The signals that represent the measured AC and DC components of the current are combined into a superposition value in a combining circuit 606. The superposition value indicates the momentary magnitude of the current that was measured with the current sensor.

An advantage of the principle shown in fig. 6 is that the measurement branches can be optimized for their respective purposes. In particular, any operational amplifier that is included in the error amplifier arrangement of the DC measurement branch 605 does not need to be fast, because the lower measurement branch only needs to react relatively slowly, so that the signal at the DC measurement value output reflects the mean value of the periodically increasing and decreasing current that flows through the current path 101. Slow and accurate operational amplifiers come typically at a significantly lower component cost than fast and accurate ones.

Separating the measurements of the DC and AC components may also assist in adapting the measurement to different AC amplitudes and/or different DC levels. The AC measurement branch may be floating in the potential sense, so the same (or at least very similar) circuitry can be used regardless of the magnitude of the DC component, at least as long as the amplitude of the AC that is expected to be measured stays the same. Correspondingly the same DC measurement circuit may be applicable to cases with wide variety in the amplitude of the AC component, because it has an inherent low pass transfer function that is effective enough against to block the effect of AC of any amplitude.

Another advantage of the arrangement is the negligible effect of most component value tolerances on the accuracy of selecting a lighting level. Particularly the components that take part in measuring the AC component have essentially no effect on the resulting overall lighting level, because the measurement of the AC component only deals with ripple in the current and not the effective (DC) value of the current, which defines the overall lighting level. The amplitude of the ripple remains relatively large even at very low dimming levels, as was explained earlier, so component tolerances play a much smaller role in measuring it than in a conventional switched-mode converter operating in discontinuous mode. The ripple is not to be confused with the pulsating form of PWM, because the ripple occurs at the switching frequency of the switched-mode converter, which may easily be hundreds of kHz. Thus the ripple does not cause those disadvantageous effects that PWM does.

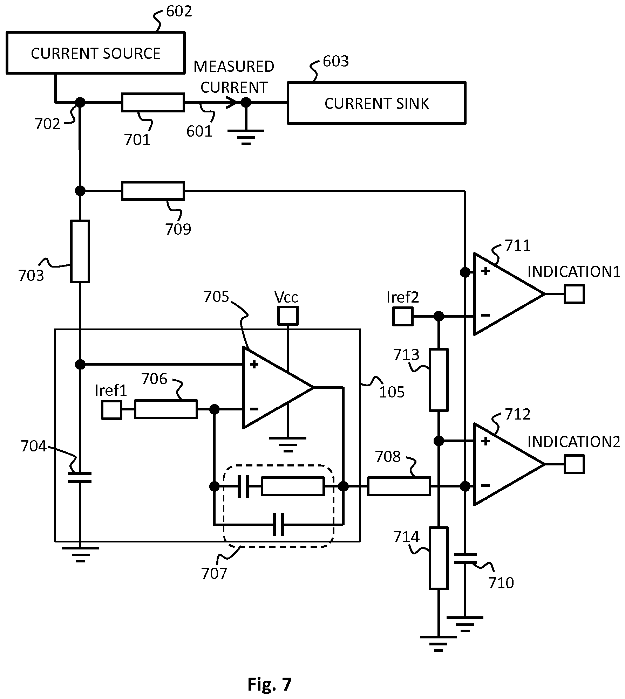

Compared to the conceptual approach of fig. 2 the AC and DC measurement branches may be understood to belong to the control circuit 209. Fig. 7 illustrates an example of a part of a control circuit with measurement branches of the explained kind. The periodically increasing and decreasing current that is to be measured flows on a current path 601 between a current source 602 and a current sink 603. In this case when the sign of the current may change, the roles of the current source 602 and current sink 603 may alternate. The current-sensing resistor 701 shown in fig. 7 may be located in the driver output current source similarly as the current-sensing resistor 110 in fig. 2, so the node 702 that serves as the input to both the AC and the DC measurement branches may be the second (lower) node of the driver device output.

In fig. 7 the DC measurement branch comprises a first low-pass filter, which is an RC filter consisting of the resistor 703 and the capacitor 704 coupled in series between the node 702 and the local ground potential. The passband of the first low-pass filter is set low enough so that it causes significant attenuation at least on the switching frequency of the switched-mode converter. For example by selecting a resistance in the order of tens of kilo-ohms for the resistor 703 and a capacitance in the order of tens of nanofarads for the capacitor 704 it is possible to set the upper limit of the passband to some tens of kHz.

The output of the first low-pass filter is coupled to a voltage integrator coupled to integrate the difference between the voltage at the filter output and an adjustable reference voltage. In fig. 7 the middle point between the resistor 703 and the capacitor 704 is coupled to the non-inverting input of a first differential amplifier 705. A voltage Iref1 that represents a desired level of current is coupled to the inverting input of the first differential amplifier 705 through a resistor 706. The predominantly capacitive feedback connection 707 between the output and the inverting input of the first differential amplifier 705 makes the circuit operate as a voltage integrator. A further resistor 708 at the output of the first differential amplifier 705 constitutes the output of the DC measurement branch.

The input to the AC measurement branch may also contain some filtering to ensure that the AC measurement is directed to the appropriate AC component(s) in the current to be measured. In the embodiment of fig. 7 the AC measurement branch comprises a second low-pass filter, which is an RC filter consisting of the resistor 709 and the capacitor 710. The passband of this second low-pass filter extends higher in frequency than the passband of the first low-pass filter described above. For example by selecting a resistance in the order of one kilo-ohm for the resistor 709 and a capacitance in the order of tens of picofarads for the capacitor 710 it is possible to set the upper limit of the passband to some tens of MHz.

The middle point between the resistor 709 and the capacitor 710 constitutes directly the output of the AC measurement branch in fig. 7. The combining circuit is simply a conductive connection between this point and the output of the DC measurement branch. The potential of this connection is a superposition value indicative of the magnitude of the current at the current sensor. In fig. 7 the output of the DC measurement branch biases this connection to a potential that represents the integrated difference between the DC component of the current and the DC current level represented by the adjustable reference voltage Iref1, and the output of the AC measurement branch makes the potential of said connection to vary at an amplitude that is proportional to the magnitude of the AC component in the measured current.

The superposition value is preferably taken to a comparator that is configured to compare it to a reference. A bidirectional comparator can be used, so that the superposition value is compared to an upper reference and to a lower reference in order to find out, whether the superposition value is between these two or whether it exceeds the upper reference or falls below the lower reference. The embodiment of fig. 7 has such a bidirectional comparator: the superposition value is taken to the non-inverting input of a second differential amplifier 711 and to the inverting input of a third differential amplifier 712. A second adjustable reference voltage Iref2 is taken to the inverting input of the second differential amplifier 711, constituting the upper reference, and a scaled sample of said second adjustable reference voltage Iref2, scaled with the voltage divider consisting of the resistors 713 and 714 and thus constituting the lower reference, is taken to the non-inverting input of the third differential amplifier 712.

The output of the second differential amplifier 711 has the label INDICATION1 in fig. 7, and the output of the third differential amplifier 712 has the label INDICATION2 in fig. 7. The output INDICATION1 goes high when the superposition value is larger than the second adjustable reference voltage Iref2, and the output INDICATION2 goes high when the superposition value is smaller than the scaled sample of the second adjustable reference voltage Iref2. The basic idea is to make the power switch in the switched-mode converter non-conductive in response to the superposition value exceeding said upper reference and to make said power switch conductive in response to the superposition value falling below said lower reference.

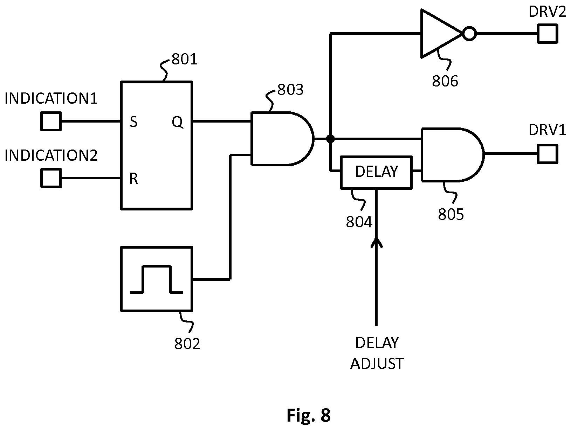

Fig. 8 illustrates an example of how the outputs of the circuit in fig. 7 can be further processed to produce the actual drive signals for the power switch and the controllable switch in the switched-mode converter of fig. 2. The signal marked INDICATION1 is taken to the S input of an S/R flip-flop 801, and the signal marked INDICATION2 is taken to the R input of the S/R flip-flop 801. The non-inverted output of the S/R flip-flop 801 and the output of a square wave generator 802 are taken to the inputs of an AND gate 803, which produces the logical value 1 when both said outputs are high. The square wave generator 802 can be taken as an example of any controller that can be used to repeatedly enable and disable the operation of the switched-mode converter at a frequency that is significantly lower than the switching frequency of the power switch. Such a controller can be used if the longer-term mean output current of the switched-mode converted is to be varied according to the PWM (pulse width modulation) principle. If PWM control is not needed, the square wave generator 802 and the AND gate 803 can be omitted, or the output of the square wave generator 802 can be set permanently high. The output of the AND gate 803 could be used as such as the control signal to the power switch 104, and in inverted form as the control signal to the controllable switch 201. If the output current source is of the high-side switch type like in fig. 2, the control signal to the power switch may be taken for example through a driver interface circuit such as the one shown in the granted European patent number EP2501024.

The embodiment of fig. 8 has additionally a controllable delay block 804 and another AND gate 805 on the path of the control signal to the power switch 104 (or: on the path to a driver interface circuit of the power switch 104). Together these constitute a controllable delay element that is configured to implement a controllable delay of a switch-on signal propagating therethrough, assuming that a rising edge is taken to mean a switch-on signal. A switch-off signal (i.e. a falling edge) will proceed through such a controllable delay element without delay, because it will immediately bring the output of the AND gate 805 down to the logical value 0. An inverter 806 is shown to emphasize that the control signal to the controllable switch 201 is complementary to the control signal to the power switch 104. In case the roles of rising and falling edges are reversed, the AND gate 805 would be replaced with a NAND gate and the inverter 806 would be removed.

The advantage of using the controllable delay element comes from the possibility of achieving zero-voltage (or near zero-voltage) switching of the power switch 104 at low output currents. Namely, at the moment when the controllable switch 201 is made non-conductive (time T₁₃ in fig. 4), an electric current continues to flow in the negative direction (from right to left in fig. 2) through the energy-storing inductor 103. This electric current pumps charge into the stray capacitances that exist around the cathode of the diode 105, the drain of the controllable switch 201, and the source of the power switch 104, causing an increase in electric potential. The electric potential of the source of the power switch 104 may rise high enough to make the drain-to-source voltage across the power switch 104 close to zero, creating the necessary condition for zero-voltage switching. The delay in the controllable delay block 804 should be long enough for this phenomenon to take effect. If exact details about the stray capacitances is not available, a suitable length for the delay may be found through simulation and/or experimenting.

Since a periodically negative current flows through the energy-storing inductor 103 only at lower desired light output levels, it is advantageous to vary the length of the controllable delay in relation to a level of desired output current of the driver device. In particular it may be advantageous to make the controllable delay longer in a manner that is inversely proportional to the magnitude of the desired output current of the driver device. Inverse proportionality does not here mean exact mathematical inverse proportionality, but merely the trend that the delay may be longer (or: exist) at smaller desired output current levels, and shorter (or: not exist) at higher desired output current levels. A suitable dependence between the desired light output level and the length of the delay may be found through simulation and/or experimenting.

The driver device comprises typically a microcontroller or a corresponding programmable circuit that can produce those control signals for which the explanation above has not mentioned any particular source. For example the references Iref1 and Iref2 mentioned in the explanation of fig. 7 may come from the microcontroller, like also the control signal to the controllable delay element in fig. 8. An alternative solution is to use fixed, calibrated voltage sources to produce the references. Such a solution can be used for example if the same basic design is to be used to build driver devices for a variety of different output currents, so that each particular driver device is fixed for use at a particular output current by fixing the values of the internal voltage sources used as references.

A method embodiment of the invention comprises producing an output current for semiconductor light sources with a switched-mode converter that comprises an energy-storing inductor, a power switch and a freewheeling current path. The voltage at the output of said switched-mode converter is maintained at or above the largest sum of forward threshold voltages of serially connected semiconductor light sources across said output. In particular the method comprises allowing electric current to flow in both directions through at least a part of a freewheeling current path of said switched-mode converter comprising said energy-storing inductor during periods when said power switch is non-conductive.

In order to time the switching actions in the switched-mode converter the method may comprise measuring the current through a section of said freewheeling current path during periods when the power switch is conductive and periods when the power switch is non-conductive. The power switch is switched from conductive to non-conductive in response to the measured current exceeding an upper reference, and from non-conductive to conductive in response to the measured current falling below a lower reference.

The measuring of the current may comprise measuring a DC component of said current and integrating a difference between the measured DC component and a reference. Correspondingly the method may comprise measuring an AC component of said current, and forming a superposition of: a) the measured AC component, and b) the integrated difference between the measured DC component and the reference. Such a superposition may be compared to said upper and lower references.

When the level of desired output current is significantly smaller than a maximum output current of said switched-mode converter, the switching of said power switch from non-conductive to conductive may take place only after a delay has passed since the measured current fell below said lower reference.

Changes and modifications can be made to the exemplary embodiments described above without departing from the scope of protection defined by the appended claims. For example the switched-mode converter included in the output current source of the driver device could be a buck converter of the low side switch type, in which case the power switch would be located between the current loop containing the energy-storing inductor and the negative node of the internal DC voltage of the driver device. The switched-mode converter could also follow some other converter topology, like that of a boost converter, a flyback converter, a SEPIC converter, a Cuk converter, or others. Components that have been illustrated as discrete components may be combined into integrated circuits in various ways.

## Claims

1. Dimmable driver device for producing a variable effective current through semiconductor light sources (101), comprising:
- an output current source (202), which is a switched-mode converter that comprises an energy-storing inductor (103), a power switch (104) and a freewheeling current path,
- an output that comprises a first node (106) and a second node (107) within said output current source,
- a capacitor (108) coupled essentially across said output for maintaining an essentially constant output voltage of said driver device,
- a controllable switch (201) on said freewheeling current path, with a control input, and
- a control circuit (209) coupled to said control input and configured to selectively maintain said controllable switch conductive during periods when said power switch (104) is non-conductive,
wherein an arrangement of said controllable switch (201) and said control circuit (209) is configured to allow electric current to flow in both directions through said controllable switch (201) during said periods when said power switch (104) is non-conductive for driving the semiconductor light sources at high accuracy and efficiency at low brightness levels;
**characterized in that**
- said control circuit (209) comprises a controllable delay element (804, 805) configured to implement a controllable delay of a switch-on signal propagating through said delay element,
- said control circuit (209) is configured to create switch-on and switch-off signals to said power switch (104) and said controllable switch (201) in complementary manner, and to direct switch-on signals to said power switch (104) through said controllable delay element (804, 805), and
- said control circuit (209) is configured to vary the length of said controllable delay in relation to a level of desired output current of the dimmable driver device.

2. A dimmable driver device according to claim 1, wherein:
- said output current source (202) is coupled to the positive (+Vbus) and negative (OV) nodes of an internal DC voltage of said driver device,
- said power switch (104) is between said positive node (+Vbus) of the internal DC voltage and a first end of said energy-storing inductor (103),
- said capacitor (108) is between a second end of said energy-storing inductor (103) and said negative node (OV) of the internal DC voltage, and
- said controllable switch (201) is between the first end of the energy-storing inductor (103) and the negative node (OV) of the internal DC voltage.

3. A dimmable driver device according to claim 2, comprising a current sensor (110) between said second node (107) of the output and said negative node (OV) of the internal DC voltage, and a coupling from said current sensor (110) to said control circuit (209) for making said control circuit (209) operate on basis of changes in the electric current measured at the current sensor (110).

4. A dimmable driver device according to claim 3, wherein said control circuit (209) comprises, coupled to said current sensor (110):
- an AC measurement branch (604) for measuring an AC component of the current at the current sensor (110),
- a DC measurement branch (605) for measuring a DC component of the current at the current sensor (110), and
- a combining circuit (606) configured to combine signals from said AC measurement branch (604) and signals from said DC measurement branch (605) into a superposition value indicative of the magnitude of the current at the current sensor (110).

5. A dimmable driver device according to claim 4, wherein:
- said DC measurement branch (605) comprises a first low-pass filter (703, 704) and a voltage integrator (705, 707) coupled to integrate the difference between a voltage output of said first low-pass filter (703, 704) and an adjustable reference voltage (Iref1),
- said AC measurement branch (604) comprises a second low-pass filter (709, 710), the passband of which extends higher in frequency than the passband of said first low-pass filter (703, 704), and
- said combining circuit comprises a biasing connection from the output of said voltage integrator (705, 707) to the output of said second low-pass filter (709, 710).

6. A dimmable driver device according to claim 5, wherein the control circuit comprises a comparator (711, 712) configured to compare the biased output of said second low-pass filter (709, 710) to a reference.

7. A dimmable driver device according to claim 6, wherein
- said comparator (711, 712) is a bidirectional comparator configured to compare the biased output of said second low-pass filter (709, 710) to an upper reference (Iref2) and a lower reference, and
- said control circuit (209) is configured to make said power switch (104) non-conductive in response to the biased output of said second low-pass filter (709, 710) exceeding said upper reference (Iref2) and make said power switch (104) conductive in response to the biased output of said second low-pass filter (709, 710) falling below said lower reference.

8. A dimmable driver device according to claim 1, wherein said control circuit (209) is configured to make said controllable delay longer in a manner inversely proportional to the magnitude of said desired output current of the dimmable driver device.

9. A method for driving and dimming semiconductor light sources with variable effective current therethrough, comprising:
- producing an output current for said semiconductor light sources (101) with a switched-mode converter that comprises an energy-storing inductor (103), a power switch (104) and a freewheeling current path in a dimmable driver device,
- maintaining the voltage at the output of said switched-mode converter at or above the largest sum of forward threshold voltages of serially connected semiconductor light sources (101) across said output,
- using a controllable switch (201) to allow electric current to flow in both directions through at least a part of a freewheeling current path of said switched-mode converter and said energy-storing inductor (103) during periods when said power switch (104) is non-conductive for driving the semiconductor light sources at high accuracy and efficiency at low brightness levels, being **characterized in that** the method further comprises
- creating switch-on and switch-off signals to said power switch (104) and said controllable switch (201) in complementary manner, and causing a controllable delay of the switch-on signals to said power switch (104), and
- varying the length of said controllable delay in relation to a level of desired output current of the dimmable driver device.

10. A method according to claim 9, comprising:
- measuring the current through a section of said freewheeling current path during periods when the power switch (104) is conductive and periods when the power switch (104) is non-conductive,
- switching said power switch (104) from conductive to non-conductive in response to the measured current exceeding an upper reference, and
- switching said power switch (104) from non-conductive to conductive in response to the measured current falling below a lower reference.

11. A method according to claim 10, wherein said measuring of the current comprises:
- measuring a DC component of said current,
- integrating a difference between the measured DC component and a reference,
- measuring an AC component of said current,
- forming a superposition of: a) the measured AC component, and b) the integrated difference between the measured DC component and the reference, and
- comparing the superposition so obtained to said upper and lower references.

12. A method according to any of claims 10 to 11, comprising:
- when the level of desired output current is significantly smaller than a maximum output current of said switched-mode converter, switching said power switch (104) from non-conductive to conductive only after said controllable delay has passed since the measured current fell below said lower reference.

## Patentansprüche

1. Dimmbares Treiberelement zur Erzeugung eines veränderlichen Effektivstroms durch Halbleiterlichtquellen (101), umfassend:
- eine Ausgangsstromquelle (202), die ein Stromrichter im Schaltbetrieb ist, der eine energiespeichernde Induktionsspule (103), einen Leistungsschalter (104) und einen Freilaufstrompfad enthält,
- einen Ausgang, der einen ersten Knoten (106) und einen zweiten Knoten (107) innerhalb der Ausgangsstromquelle aufweist,
- einen Kondensator (108), der im Wesentlichen über dem Ausgang gekoppelt ist, um eine im Wesentlichen konstante Ausgangsspannung des Treiberelements zu halten,
- einen steuerbaren Schalter (201) in dem Freilaufstrompfad mit einem Steuereingang, und
- einen Steuerstromkreis (209), der mit dem Steuereingang gekoppelt und ausgelegt ist, um den steuerbaren Schalter in Perioden, wenn der Leistungsschalter (104) nicht stromführend ist, selektiv stromführend zu halten,
wobei eine Anordnung des steuerbaren Schalters (201) und des Steuerstromkreises (209) so gestaltet ist, dass elektrischer Strom in beide Richtungen durch den steuerbaren Schalter (201) in den Perioden fließen kann, wenn der Leistungsschalter (104) nicht stromführend ist, um die Halbleiterlichtquellen mit hoher Genauigkeit und Leistung bei niedrigen Helligkeitsniveaus zu steuern;
**dadurch gekennzeichnet, dass**
- der Steuerstromkreis (209) aus einem steuerbaren Verzögerungselement (804, 805) besteht, das ausgestaltet ist, um eine regelbare Verzögerung eines durch das Verzögerungselement sich ausbreitenden Einschaltsignals zu realisieren,
- wobei der Steuerstromkreis (209) so ausgeführt ist, um Einschalt- und Ausschaltsignale an den Leistungsschalter (104) und den steuerbaren Schalter (201) in komplementärer Weise zu erzeugen und Einschaltsignale an den Leistungsschalter (104) durch das steuerbare Verzögerungselement (804, 805) zu leiten, und
- der Steuerstromkreis (209) ausgelegt ist, um die Länge der regelbaren Verzögerung im Verhältnis zu einer Höhe des gewünschten Ausgangsstroms des dimmbaren Treiberelements zu variieren.

2. Dimmbares Treiberelement nach Anspruch 1, wobei:
- die Ausgangsstromquelle (202) mit dem positiven (+Vbus) und den negativen (OV) Knoten einer internen Gleichspannung des Treiberelements gekoppelt ist,
- der Leistungsschalter (104) zwischen dem positiven Knoten (+Vbus) der internen Gleichspannung und einem ersten Ende der energiespeichernden Induktionsspule (103) liegt,
- der Kondensator (108) zwischen einem zweiten Ende der energiespeichernden Induktionsspule (103) und dem negativen Knoten (OV) der internen Gleichspannung liegt, und
- der steuerbare Schalter (201) zwischen dem ersten Ende der energiespeichernden Induktionsspule (103) und dem negativen Knoten (OV) der internen Gleichspannung liegt.

3. Dimmbares Treiberelement nach Anspruch 2, umfassend einen Stromsensor (110) zwischen dem zweiten Knoten (107) des Ausgangs und dem negativen Knoten (OV) der internen Gleichspannung, und eine Verbindung von dem Stromsensor (110) zu dem Steuerstromkreis (209), um den Betrieb des Steuerstromkreises (209) auf der Basis von Änderungen bei dem am Stromsensor (110) gemessenen elektrischen Strom herzustellen.

4. Dimmbares Treiberelement nach Anspruch 3, wobei der Steuerstromkreis (209), mit dem Stromsensor (110) gekoppelt, umfasst:
- einen Wechselstrommesszweig (604) zur Messung einer Wechselstromkomponente des Stroms am Stromsensor (110),
- einen Gleichstrommesszweig (605) zur Messung einer Gleichstromkomponente des Stroms am Stromsensor (110), und
- einen Kombinierschaltkreis (606), der ausgelegt ist, Signale von dem Wechselstrommesszweig (604) und Signale von dem Gleichstrommesszweig (605) zu einem Überlagerungswert zu kombinieren, der die Größe des Stroms an dem Stromsensor (110) angibt.

5. Dimmbares Treiberelement nach Anspruch 4, wobei:
- der Gleichstrommesszweig (605) ein erstes Tiefpassfilter (703, 704) und einen Spannungsintegrator (705, 707) umfasst, gekoppelt, um die Differenz zwischen einem Spannungsausgang des ersten Tiefpassfilters (703, 704) und einer einstellbaren Bezugsspannung (Iref1) zu integrieren,
- der Wechselspannungsmesszweig (604) ein zweites Tiefpassfilter (709, 710) umfasst, dessen Durchlassbereich sich in der Frequenz höher erstreckt als der Durchlassbereich des ersten Tiefpassfilters (703, 704), und
- der Kombinierschaltkreis eine Vorspannungsverbindung vom Ausgang des Spannungsintegrators (705, 707) zum Ausgang des zweiten Tiefpassfilters (709, 710) aufweist.

6. Dimmbares Treiberelement nach Anspruch 5, wobei der Steuerstromkreis einen Vergleicher (711, 712) aufweist, der gestaltet ist, um den verzerrten Ausgang des zweiten Tiefpassfilters (709, 710) mit einem Bezugswert zu vergleichen.

7. Dimmbares Treiberelement nach Anspruch 6, wobei
- der Vergleicher (711, 712) ein Zweirichtungsvergleicher ist, so gestaltet, dass der verzerrte Ausgang des zweiten Tiefpassfilters (709, 710) mit einem höheren Bezugswert (iref2) und einem niedrigeren Bezugswert verglichen wird, und
- der Steuerstromkreis (209) so gestaltet ist, dass er den Leistungsschalter (104) nicht stromführend macht als Reaktion auf den verzerrten Ausgang des zweiten Tiefpassfilters (709, 710), der den höheren Bezugswert (iref2) überschreitet, und den Leistungsschalter (104) stromführend macht als Reaktion auf den verzerrten Ausgang des zweiten Tiefpassfilters (709, 710), der unter den niedrigeren Bezugswert fällt.

8. Dimmbares Treiberelement nach Anspruch 1, wobei der Steuerstromkreis (209) so gestaltet ist, um die regelbare Verzögerung in einer Weise umgekehrt proportional zur Größe des gewünschten Ausgangsstroms des dimmbaren Treiberelements länger zu machen.

9. Verfahren zum Steuern und Dimmen von Halbleiterlichtquellen mit veränderlichem Effektivstrom durch diese hindurch, umfassend:
- Erzeugen eines Ausgangsstroms für die Halbleiterlichtquellen (101) mit einem Stromrichter im Schaltbetrieb, der eine energiespeichernde Induktionsspule (103), einen Leistungsschalter (104) und einen Freilaufstrompfad in einem dimmbaren Treiberelement enthält,
- Halten der Spannung am Ausgang des Stromrichters im Schaltbetrieb auf oder über der größten Summe von Schwellenspannungen in Vorwärtsrichtung in Reihe geschalteter Halbleiterlichtquellen (101) über dem Ausgang,
- Verwenden eines steuerbaren Schalters (201), so dass elektrischer Strom in beide Richtungen durch mindestens einen Teil eines Freilaufstrompfades des Stromrichters im Schaltbetrieb und der energiespeichernden Induktionsspule (103) in Perioden fließen kann, wenn der Leistungsschalter (104) nicht stromführend ist, um die Halbleiterlichtquellen mit hoher Genauigkeit und Leistung bei niedrigen Helligkeitsniveaus zu steuern, **dadurch gekennzeichnet, dass** das Verfahren des Weiteren umfasst:
- Erzeugen von Einschalt- und Ausschaltsignalen an den Leistungsschalter (104) und den steuerbaren Schalter (201) in komplementärer Weise, und Bewirken einer regelbaren Verzögerung der Einschaltsignale an den Leistungsschalter (104), und
- Verändern der Länge der regelbaren Verzögerung im Verhältnis zu einer Höhe des gewünschten Ausgangsstroms des dimmbaren Treiberelements.

10. Verfahren nach Anspruch 9, umfassend:
- Messen des Stroms durch einen Abschnitt des Freilaufstrompfades in Perioden, wenn der Leistungsschalter (104) stromführend ist, und in Perioden, wenn der Leistungsschalter (104) nicht stromführend ist,
- Schalten des Leistungsschalters (104) von stromführend auf nicht stromführend als Reaktion auf den gemessenen Strom, der einen höheren Bezugswert überschreitet, und
- Schalten des Leistungsschalters (104) von nicht stromführend auf stromführend als Reaktion auf den gemessenen Strom, der unter einen niedrigeren Bezugswert fällt.

11. Verfahren nach Anspruch 10, wobei die Messung des Stroms umfasst:
- Messen einer Gleichstromkomponente des Stroms,
- Integrieren einer Differenz zwischen der gemessenen Gleichstromkomponente und einem Bezugswert,
- Messen einer Wechselstromkomponente des Stroms,
- Bilden einer Überlagerung: a) der gemessenen Wechselstromkomponente und b) der integrierten Differenz zwischen der gemessenen Gleichstromkomponente und dem Bezugswert, und
- Vergleichen der so erlangten Überlagerung mit höheren und niedrigeren Bezugswerten.

12. Verfahren nach einem der Ansprüche 10 bis 11, umfassend:
- wenn die Höhe des gewünschten Ausgangsstroms bedeutend kleiner ist als ein maximaler Ausgangsstrom des Stromrichters im Schaltbetrieb, Schalten des Leistungsschalters (104) von nicht stromführend auf stromführend, nur nachdem die regelbare Verzögerung überschritten ist, da der gemessene Strom unter den niedrigeren Bezugswert gefallen ist.

## Revendications

1. Dispositif de commande à gradation pour produire un courant effectif variable à travers des sources de lumière à semi-conducteurs (101), comprenant :
- une source de courant de sortie (202), qui est un convertisseur à découpage qui comprend une inductance de stockage d'énergie (103), un interrupteur de puissance (104) et un trajet de courant de roue libre,
- une sortie qui comprend un premier nœud (106) et un second nœud (107) à l'intérieur de ladite source de courant de sortie,
- un condensateur (108) couplé essentiellement aux bornes de ladite sortie pour maintenir une tension de sortie essentiellement constante dudit dispositif de commande,
- un interrupteur contrôlable (201) sur ledit trajet de courant de roue libre, avec une entrée de commande, et
- un circuit de commande (209) couplé à ladite entrée de commande et configuré pour maintenir sélectivement ledit interrupteur contrôlable conducteur pendant les périodes où ledit interrupteur de puissance (104) est non conducteur,
dans lequel un agencement dudit interrupteur contrôlable (201) et dudit circuit de commande (209) est configuré pour permettre au courant électrique de circuler dans les deux sens par ledit interrupteur contrôlable (201) pendant lesdites périodes où ledit interrupteur de puissance (104) est non conducteur pour piloter les sources de lumière à semi-conducteurs avec une grande précision et une grande efficacité à de faibles niveaux de luminosité ;
**caractérisé en ce que**
- ledit circuit de commande (209) comprend un élément à retard contrôlable (804, 805) configuré pour mettre en œuvre un retard contrôlable d'un signal de mise en marche se propageant à travers ledit élément à retard,
- ledit circuit de commande (209) est configuré pour créer des signaux de mise en marche et d'arrêt au ledit interrupteur de puissance (104) et ledit interrupteur contrôlable (201) de manière complémentaire, et pour diriger des signaux de mise en marche vers ledit interrupteur de puissance (104) à travers ledit élément à retard contrôlable (804, 805), et
- ledit circuit de commande (209) est configuré pour faire varier la longueur dudit retard contrôlable par rapport à un niveau de courant de sortie souhaité dudit dispositif de commande à gradation.

2. Dispositif de commande à gradation selon la revendication 1, dans lequel :
- ladite source de courant de sortie (202) est couplée aux noeuds positif (+Vbus) et négatif (OV) d'une tension DC interne dudit dispositif de commande,
- ledit interrupteur de puissance (104) est situé entre ledit nœud positif (+Vbus) de la tension DC interne et une première extrémité de ladite inductance de stockage d'énergie (103),
- ledit condensateur (108) se trouve entre une seconde extrémité de ladite inductance de stockage d'énergie (103) et ledit nœud négatif (OV) de la tension DC interne, et
- ledit interrupteur contrôlable (201) se trouve entre la première extrémité de l'inductance de stockage d'énergie (103) et le nœud négatif (OV) de la tension DC interne.

3. Dispositif de commande à gradation selon la revendication 2, comprenant un capteur de courant (110) entre ledit deuxième nœud (107) de la sortie et ledit nœud négatif (OV) de la tension DC interne, et un couplage dudit capteur de courant (110) audit circuit de commande (209) pour faire fonctionner ledit circuit de commande (209) sur la base des variations du courant électrique mesuré au niveau du capteur de courant (110).

4. Dispositif de commande à gradation selon la revendication 3, dans lequel ledit circuit de commande (209) comprend, couplé audit capteur de courant (110) :
- une branche de mesure AC (604) pour mesurer une composante AC du courant au niveau du capteur de courant (110),
- une branche de mesure DC (605) pour mesurer une composante DC du courant au niveau du capteur de courant (110), et
- un circuit de combinaison (606) configuré pour combiner les signaux de ladite branche de mesure AC (604) et les signaux de ladite branche de mesure DC (605) en une valeur de superposition indicative de l'amplitude du courant au niveau du capteur de courant (110).

5. Dispositif de commande à gradation selon la revendication 4, dans lequel :
- ladite branche de mesure DC (605) comprend un premier filtre passe-bas (703, 704) et un intégrateur de tension (705, 707) couplé pour intégrer la différence entre une sortie de tension dudit premier filtre passe-bas (703, 704) et une tension de référence réglable (Iref1),
- ladite branche de mesure AC (604) comprend un second filtre passe-bas (709, 710), dont la bande passante s'étend à une fréquence supérieure à celle de la bande passante dudit premier filtre passe-bas (703, 704), et
- ledit circuit de combinaison comprend une connexion de polarisation entre la sortie dudit intégrateur de tension (705, 707) et la sortie dudit second filtre passe-bas (709, 710).

6. Dispositif de commande à gradation selon la revendication 5, dans lequel le circuit de commande comprend un comparateur (711, 712) configuré pour comparer la sortie polarisée dudit deuxième filtre passe-bas (709, 710) à une référence.

7. Dispositif de commande à gradation selon la revendication 6, dans lequel
- ledit comparateur (711, 712) est un comparateur bidirectionnel configuré pour comparer la sortie polarisée dudit second filtre passe-bas (709, 710) à une référence supérieure (Iref2) et à une référence inférieure, et
- ledit circuit de commande (209) est configuré pour rendre ledit interrupteur de puissance (104) non conducteur en réponse à la sortie polarisée dudit second filtre passe-bas (709, 710) dépassant ladite référence supérieure (Iref2) et pour rendre ledit interrupteur de puissance (104) conducteur en réponse à la sortie polarisée dudit deuxième filtre passe-bas (709, 710) tombant en dessous de ladite référence inférieure.

8. Dispositif de commande à gradation selon la revendication 1, dans lequel ledit circuit de commande (209) est configuré pour rendre ledit retard contrôlable plus long d'une manière inversement proportionnelle à l'amplitude dudit courant de sortie souhaité dudit dispositif de commande à gradation.

9. Procédé de commande et de gradation de sources lumineuses à semi-conducteurs avec un courant effectif variable traversant, comprenant :
- production d'un courant de sortie pour lesdites sources de lumière à semi-conducteurs (101) avec un convertisseur à découpage qui comprend une inductance de stockage d'énergie (103), un interrupteur de puissance (104) et un trajet de courant en roue libre dans un dispositif de commande à intensité variable,
- maintient de la tension à la sortie dudit convertisseur à découpage à ou au-dessus de la plus grande somme des tensions de seuil aller des sources lumineuses à semi-conducteurs (101) connectées en série sur ladite sortie,
- utilisation d'un interrupteur contrôlable (201) pour permettre au courant électrique de circuler dans les deux sens à travers au moins une partie d'un trajet de courant de roue libre dudit convertisseur à découpage et de ladite inductance de stockage d'énergie (103) pendant les périodes où ledit interrupteur de puissance (104) est non conducteur pour commander les sources de lumière à semi-conducteurs avec une grande précision et une grande efficacité à de faibles niveaux de luminosité, étant **caractérisé en ce que** le procédé comprend en outre
- création de manière complémentaire de signaux de mise en marche et d'arrêt vers ledit interrupteur de puissance (104) et ledit interrupteur contrôlable (201), et provoquant un retard contrôlable des signaux de mise en marche vers ledit interrupteur de puissance (104), et
- variation de la longueur dudit retard contrôlable en fonction d'un niveau de courant de sortie souhaité du dispositif de commande à gradation.

10. Procédé selon la revendication 9, comprenant :
- mesure du courant à travers une section dudit trajet de courant en roue libre pendant les périodes où l'interrupteur de puissance (104) est conducteur et les périodes où l'interrupteur de puissance (104) est non conducteur,
- commutation dudit interrupteur de puissance (104) de conducteur à non conducteur en réponse à un courant mesuré dépassant une référence supérieure, et
- commutation dudit interrupteur de puissance (104) de non-conducteur à conducteur en réponse à la chute du courant mesuré en dessous d'une référence inférieure.

11. Procédé selon la revendication 10, dans laquelle ladite mesure du courant comprend :
- mesure d'une composante DC dudit courant,
- intégration d'une différence entre la composante DC mesurée et une référence,
- mesure d'une composante AC dudit courant,
- formation d'une superposition de : a) la composante AC mesurée, et b) la différence intégrée entre la composante DC mesurée et la référence, et
- comparaison de la superposition ainsi obtenue auxdites références supérieures et inférieures.

12. Procédé selon l'une des revendications 10 à 11, comprenant :
- lorsque le niveau du courant de sortie souhaité est significativement inférieur à un courant de sortie maximum dudit convertisseur à découpage, commutation dudit interrupteur de puissance (104) de non-conducteur à conducteur seulement après que ledit retard contrôlable se soit écoulé depuis le courant mesuré indiqué en dessous de ladite référence inférieure.
